(19) Europäisches Patentamt
European Patent Office
Office européen des brevets

(11) EP 0 759 549 A1

(12) EUROPÄISCHE PATENTANMELDUNG

(43) Veröffentlichungstag:
26.02.1997 Patentblatt 1997/09

(51) Int. Cl.$^6$: **G01N 21/80**

(21) Anmeldenummer: 96110546.7

(22) Anmeldetag: 29.06.1996

(84) Benannte Vertragsstaaten:
BE FR GB IT LU NL

(30) Priorität: 17.08.1995 DE 19530183

(71) Anmelder: Macherey, Nagel & Co.
52355 Düren (DE)

(72) Erfinder:
• Radmacher, Edmund Dr.
52349 Düren (DE)

• Heering, Karl-Heinz
52372 Kreuzau-Untermaubach (DE)
• Czyron, Dietmar
52353 Düren-Echtz (DE)

(74) Vertreter: Paul, Dieter-Alfred, Dipl.-Ing.
Fichtestrasse 18
41464 Neuss (DE)

(54) **Photometrische pH-Messung**

(57) Bei einem Verfahren zur photometrischen Bestimmung des pH-Wertes von wässrigen Flüssigkeiten in Gegenwart eines pH-Indikators soll eine sehr genaue Messung des pH-Werts über einen breiten pH-Bereich ermöglicht werden, wobei Einflüsse der Indikatorkonzentration in der Meßlösung auf das Meßsignal eliminiert werden können. Hierzu wird als pH-Indikator ein Gemisch aus mehreren Indikatoren verwendet und mit Hilfe eines Photometers die Extinktion E bei zwei unterschiedlichen Wellenlängen, nämlich M1 und M2, gemessen, die pH-abhängig sind, der Quotient QpH aus den gemessenen Extinktionswerten $E_{M1}$ und $E_{M2}$ gebildet und aus dem Quotienten QpH unter Berücksichtigung des verwendeten pH-Indikators der pH-Wert der untersuchten Flüssigkeit unter Verwendung von Eichkurven ermittelt.

**Beschreibung**

Die vorliegende Erfindung betrifft ein Verfahren zur photometrischen pH-Messung von wäßrigen Flüssigkeiten in Gegenwart eines pH-Indikatorgemisches.

Der pH-Wert einer Flüssigkeit, insbesondere einer wäßrigen Lösung oder Wasser, ist ein wichtiges Merkmal für eine Lösung bzw. für die Qualität von Wasser. In der Regel erfolgt die Bestimmung des pH-Wertes mit Hilfe von pH-Elektroden, die die Potentialdifferenz zwischen der zu untersuchenden Flüssigkeit und einer Standardlösung messen. Diese Meßelektroden sind ausschließlich für die pH-Messung geeignet. Bei der Schnellanalyse von Wasser bzw. wäßrigen Lösungen ist jedoch auch die Bestimmung von in dem Wasser enthaltenden anderen Bestandteilen notwendig. Die weiteren Bestandteile werden in der Regel mit Hilfe von photometrischen Messungen bestimmt. In der chemischen Wasseranalytik sind also zwei Analysengeräte erforderlich, um eine Schnellanalyse durchzuführen.

Eine weniger genaue Schnellmessung von pH-Werten kann auch über kolorimetrische Meßverfahren erfolgen. Hierbei verwendet man Neutralisations-Indikatoren, die bei bestimmten pH-Werten Farbumschläge zeigen und die zum Teil in Form von sogenannten Universal-Indikatoren eingesetzt werden. Diese Universal-Indikatoren enthalten verschiedene Indikatoren mit systematisch abgestuften, bekannten Umschlagsgebieten. Wenn die Umschlagsgebiete der Indikatoren sich lückenlos aneinander anschließen, so wird sich ein Indikator bei dem betreffenden pH-Wert gerade in seinem Umschlagsgebiet befinden und eine Übergangsfarbe zeigen. Damit ist der pH-Wert in erster Näherung ermittelt. Ein derartiges Verfahren ist jedoch zur genauen pH-Bestimmung ungeeignet.

Wie bereits voranstehend erwähnt, nimmt die Photometrie bei der chemischen Analyse von Flüssigkeiten bzw. Wasser einen festen Platz ein. Bei der Photometrie wird eine vorhandene oder zu erzeugende Färbung erfaßt und im Zusammenhang mit der Konzentration der zu messenden bzw. nachzuweisenden Substanz gebracht. Soweit die Substanz ihre Färbung nicht von Natur aus besitzt, wird der Flüssigkeitsprobe ein geeignetes Reagens zugegeben, das eine gefärbte Verbindung entstehen läßt. Im Photometer wird das Licht vor der Messung zerlegt und nur der Teil des Spektrums verwendet, in dem die gefärbte Verbindung absorbiert. Das Maß der Absorption entspricht dann der Konzentration der nachzuweisenden Substanz.

Auch der pH-Wert kann photometrisch bestimmt werden. Bei der photometrischen pH-Messung wird der Indikator zur Analysenlösung gegeben und das Maß der Absorption (Extinktion) der Indikator-Säure oder der Indikator-Base bestimmt. Aus Tabellenwerken bzw. aus Eichkurven, die die Abhängigkeit zwischen Extinktion und pH-Wert wiedergeben, kann der der gemessenen Extinktion entsprechende pH-Wert ermittelt werden.

Die Genauigkeit der photometrischen pH-Messung ist von verschiedenen Faktoren abhängig. So ist die Extinktion bei einer definierten Meßwellenlänge M, $E_M$, eine Funktion des pH-Wertes und eine Funktion der Indikatorkonzentration. Das bedeutet, daß zur richtigen Umrechnung der Extinktion EM in den pH-Wert die Konzentration des Indikators bei allen Messungen gleich bleiben sollte, um eine Vergleichbarkeit der Messungen zu garantieren. Ein weiteres Problem besteht darin, daß der Zusammenhang zwischen dem pH-Wert und EM nicht linear ist, sondern eine Funktion höheren Grades. Das bedeutet, daß auch kleine Ungenauigkeiten in der Dosierung des Indikators zu großen Abweichungen führen können.

In der DE 28 51 138 C2 wird ein Verfahren offenbart, bei dem der pH-Wert von Blut photometrisch bei zwei Meßwellenlängen bestimmt wird. Als Indikator wird Phenolrot eingesetzt, das sich in einer Meßzelle mit einer protonendurchlässigen Membran befindet. Die Indikatorkonzentration in der Meßzelle ist konstant. Als eine Meßwellenlänge wird eine Wellenlänge ausgewählt, bei der die Indikator-Base (A-) die maximale Extinktion zeigt, d.h. bei 560 nm. Die zweite Meßwellenlänge muß gemäß dieser Druckschrift vom pH-Wert unabhängig sein. Die zweite Meßwellenlänge ist zur Normierung des Lichts notwendig. Es wird das vom pH-Wert der Probe unbeeinflußte Licht gemessen. Aus der gemessenen Absorption der Meßlösungen bei den entsprechenden Wellenlängen, für Phenolrot bei 560 nm und bei 485 nm oder über 600 nm, wird der Quotient gebildet, und aus entsprechend ermittelten Eichkurven kann der dazugehörige pH-Wert abgelesen oder mit Hilfe eines entsprechenden Computerprogramms direkt am Meßgerät abgelesen werden.

In der deutschen Offenlegungsschrift DE-OS 27 20 370 wird eine Anordnung zur optischen Messung von Stoffkonzentrationen, bestehend aus einem Monochromator, einer Lichtmeßeinrichtung und mindestens einer Optode, beschrieben, worin dem Indikator ein weiterer Referenzindikator zugefügt ist, der das Meßlicht verändert und der von der Konzentration des zu messenden Stoffes nicht verändert wird. Die erhaltenen Meßsignale sind von mehreren Faktoren abhängig, nämlich von der Indikatorkonzentration, der Konzentration des zu messenden Stoffes sowie einem Faktor, der die Intensität der Meßsignale verzerrt. Um nach dem hier beschriebenen Verfahren eine genaue pH-Messung vornehmen zu können, ist es erforderlich, den Indikator genau zu dosieren. Auch Störungen innerhalb der zugesetzten Indikatorlösung, wie sie beispielsweise durch Zerfall des Indikators und Verunreinigungen auftreten können, bleiben unberücksichtigt.

Aufgabe der vorliegenden Erfindung ist es, ein Verfahren zur photometrischen Bestimmung des pH-Wertes von Flüssigkeiten in Gegenwart eines pH-Indikators zur Verfügung zu stellen, welches eine schnelle und sehr genaue Messung des pH-Wertes über einen breiten pH-Bereich ermöglicht, wobei Einflüsse der Indikatorkonzentration in der Meßlösung auf das Meßsignal eliminiert werden können.

Gegenstand der vorliegenden Erfindung ist ein Verfahren zur photometrischen Bestimmung des pH-Wertes von wäßrigen Flüssigkeiten in Gegenwart eines pH-Indikators, der dadurch gekennzeichnet ist, daß als pH-Indikator ein Gemisch aus mehreren Indikatoren verwendet wird und mit Hilfe eines Photometers die Extinktion E bei zwei unterschiedlichen Wellenlängen, nämlich M1 und M2 gemessen wird, die pH-abhängig sind, der Quotient QpH aus den gemessenen Extinktionswerten $E_{M1}$ und $E_{M2}$ gebildet wird und aus dem Quotienten QpH unter Berücksichtigung des verwendeten pH-Indikators der pH-Wert der untersuchten Flüssigkeit unter Verwendung von Eichkurven ermittelt wird.

Das erfindungsgemäße Verfahren hat den Vorteil, daß sich bei Ermittlung des pH-Wertes der Meßfehler, der sich durch den Einfluß der schwankenden Indikatorkonzentration ergibt, durch Quotientenbildung wegkürzt. Es ist also möglich, den pH-Wert einer wäßrigen Flüssigkeit mit bisher unerreichter Präzision und über einen breiten pH-Bereich, der mehrere pH-Intervalle überstreichen kann, beispielsweise von 3 bis 1∅, durchzuführen.

Wie bereits oben ausgeführt, wird bei der photometrischen pH-Messung die Extinktion (Absorption) E bestimmt. Die Extinktion E einer wäßrigen Lösung ist abhängig von der Konzentration c der Lösung, der Schichtdicke d der Meßküvette und dem Extinktionskoeffinzienten e. e ist eine Konstante, deren Größe durch die Substanz, die Meßwellenlänge und den vorherrschenden pH-Wert bestimmt ist, wobei die Extinktion E folgender Formel genügt:

$$E = c \times d \times e(S,B)$$

In dieser Formel bedeutet e (S) die Molarextinktion der Indikator-Säure beim jeweiligen pH-Wert und e (B) die Molarextinktion der Indikator-Base beim jeweiligen pH-Wert. Die Extinktion der Indikator-Base (dissoziierte Form) und der Indikator-Säure (undissoziierte Form) sind von der Wasserstoffionenkonzentration und somit vom pH-Wert abhängig.

Als Indikatoren für das erfindungsgemäß eingesetzt Indikatorgemisch eignen sich alle zur pH-Messung einsetzbaren Farbindikatoren. Bevorzugt setzt sich das Indikatorgemisch aus solchen Indikatoren zusammen, die ihren Umschlagspunkt oder -bereich bei unterschiedlichen pH-Werten haben. Die Indikatoren sollten eine signifikante Änderung der Extinktion bei den verwendeten Wellenlängen aufweisen. Die Summe der Umschlagsbereiche aller verwendeter Indikatoren bestimmt dann den möglichen Meßbereich. Die einzelnen Indikatoren weisen bevorzugt bei steigendem pH-Wert bei einer festgelegten Wellenlänge M1 eine abnehmende Extinktion und bei einer festgelegten Wellenlänge M2 eine zunehmende Extinktion auf.

Besonders bevorzugt werden die einzelnen Indikatoren so ausgewählt, daß auch das Indikatorgemisch bei steigendem pH-Wert bei einer Wellenlänge M1 eine abnehmende Extinktion und bei der Wellenlänge M2 eine zunehmende Extinktion aufweist. Das pH-Intervall und die Konzentration der einzelnen Indikatoren sollte so ausgewählt werden, daß sich über den gewählten pH-Meßbereich eine möglichst harmonische Funktion E(pH) erhalten wird. Das bedeutet, mißt man die Extinktion der Lösung des Indikatorgemisches über den gewünschten pH-Bereich, so sollte eine Funktion ohne Plateaus erhalten werden. Um Mehrdeutigkeiten bei der pH-Bestimmung zu vermeiden, sollte die Funktion E (pH) innerhalb des Arbeitsbereichs keine Vorzeichenwechsel in der Steigung aufweist. Es ist aber nicht erforderlich, daß die Steigung konstant ist, d. h. E (pH) eine Gerade darstellt. Als für das Indikatorgemisch geeignete Indikatoren seien beispielhaft Phenolrot, Bromphenolblau, Bromthymolblau, Bromkresylgrün und Alizaringelb genannt.

Zur Bestimmung des pH-Werts werden die Extinktion $E_{M1}$ und $E_{M2}$ bei zwei verschiedenen Wellenlängen M1 und M2 bestimmt.

Erfindungsgemäß wird die Extinktion E(1,2) bei zwei Wellenlängen M (1,2) gemessen, die beide pH-abhängig sind, wobei bevorzugt ist, daß über den möglichen pH-Bereich die Extinktion $E_{M1}$ bei der Wellenlänge M1 abnimmt und bei der Wellenlänge M2 zunimmt. Aus den gemessenen Extinktionswerten $E_{M1}$ und $E_{M2}$ wird der Quotient gemäß der folgenden Gleichung gebildet.

$$\frac{E_{M1}}{E_{M2}} = \frac{c_1 \times d_1 \times e(1)}{c_2 \times d_2 \times e(2)}$$

Da $c_1 = c_2$ und $d_1 = d_2$ ist, kürzen sich die Faktoren d und c weg, so daß der Quotient allein von den Molarextinktionen der Indikator-Base und der Indikator-Säure, d.h. vom pH-Wert, abhängt. Die Konzentration des Indikators in der Lösung geht nicht in die Rechnung ein, und beeinflußt die Bestimmung des pH-Wertes nicht. Andere Störfaktoren wie Eigenfarbe und Trübung der Probe werden üblicherweise durch die Nullstellung der unbehandelten Probe eliminiert.

Die Auswahl der Wellenlängen M1 und M2 erfolgt in dieser Ausführungsform üblicherweise in Abhängigkeit vom verwendeten Indikatorgemisch. Als Wellenlänge M1 eignet sich insbesondere eine Wellenlänge, bei der die Extinktionskurve über den pH-Bereich möglichst gleichmäßig sinkt, d.h. eine gleichmäßig negative Steigung aufweist. Als Wellenlänge M2 wird bevorzugt eine Wellenlänge ausgewählt, bei der die Extinktionskurve über den pH-Bereich möglichst gleichmäßig steigt.

Ist die Extinktionskurve des Indikatorgemisches nicht bekannt, so werden üblicherweise zuerst die Absorptionsspektren des Indikatorgemisches im sauren und im alkalischen Bereich aufgezeichnet, aus denen die Wellenlängen M1 und M2 bestimmt werden. Als Wellenlänge M1 zur Aufnahme der Extinktionskurve eignet sich jede Wellenlänge, bei welcher sich die Extinktion der im Gemisch vorliegenden Indikator-Säuren in Abhängigkeit vom pH-Wert ändert. Entsprechend eignet sich als zweite Wellenlänge M2 der Indikator-Base jede Wellenlänge, bei welcher sich die Extinktion der Indikator-Base in Abhängigkeit vom pH-Wert ändert. Es ist bevorzugt, die Wellenlängen so auszuwählen, daß die Extinktionsfunktion f(QpH) an allen Punkten im Meßbereich eine ausreichende Steilheit aufweist.

Vorteilhafterweise werden als Wellenlängen M1 und M2 diejenigen Wellenlängen ausgewählt, bei der die aufgezeichneten Absorptionsspektren die maximale Extinktion zeigen, oder eine Wellenlänge, die in der Nähe des Maximums liegt. Werden die Extinktionsmessungen mit Filterphotometern durchgeführt, so erfolgt die Messung vorteilhafterweise mittels der beiden Filter die am nächsten zum jeweiligen Maximum stehen.

Die Ermittlung des pH-Wertes aus dem Quotienten QpH erfolgt in der Regel in an sich bekannter Weise unter Verwendung von Eichkurven, die ggf. selbst ermittelt wurden.

In einer bevorzugten Ausführungsform wird das erfindungsgemäße Verfahren mit Hilfe eines Photometers mit integriertem Rechner und Speicher durchgeführt. Mit Hilfe dieser Photometer ist es möglich, die Eichkurve pH = f (QpH) für die jeweiligen pH-Indikatorgemische zu speichern. Bei der durchgeführten pH-Messung werden die beiden Extinktionswerte $E_{M1}$ und $E_{M2}$ bei den entsprechenden Wellenlängen M programmgesteuert gemessen. Der Quotient QpH wird direkt ermittelt, und aus einem internen, wiederum programmgesteuerten Vergleich mit der Eichkurve kann die pH-Anzeige direkt danach im Display erfolgen.

In einer besonders bevorzugten Ausführungsform wird das erfindungsgemäße Verfahren mit Hilfe eines Photometers durchgeführt, welches eine Lichtstrecke, in der eine Lichtquelle, eine Küvettenaufnahme, eine Monochromatisierungs-Einrichtung zur Monochromatisierung des Lichtes der Lichtquelle, eine Wechseleinrichtung zur Einstellung der Monochromatisierungsrichtung auf verschiedene Wellenlängen und eine Lichtmeßeinrichtung angeordnet sind, und einen Speicher, in dem gemessene Werte von Erst- und Wiederholungslichtmengenmessungen für eine Erst- bzw. Neukalibrierung des Photometers als gespeicherte Werte ablegbar sind, sowie eine Speichersteuerung aufweist, über die bei einer Erstkalibrierung die dabei aus einer Erstlichtmengenmessung mit Einzelmessungen bei allen Wellenlängen ermittelten Werte in den Speicher einspeicherbar und über die bei einer Wiederholungslichtmengenmessung jeweils ein gespeicherter Wert mit einem dabei durch eine Einzelmessung ermittelten aktuellen Wert überschreibbar ist. Dieses Photometer weist ferner eine automatische, mit der Wechseleinrichtung der Monochromatisierungseinrichtung gekoppelte Einzelmeßsteuerung auf, die die Einzelmessungen von Wiederholungslichtmengenmessungen in der Weise steuert, daß bei einer Wiederholungslichtmengenmessung nicht alle möglichen Einzelmessungen - vorzugsweise sogar nur wenige oder sogar lediglich eine einzige Einzelmessung - und die Einzelmessungen von mehreren Wiederholungslichtmengenmessungen in einer solchen Reihenfolge durchgeführt werden, daß nacheinander alle Wellenlängenbereiche durchgemessen werden. Besonders bevorzugt hat das Photometer also eine Einzelmeßsteuerung, die die Anwendung des erfindungsgemäßen Verfahrens automatisch in einer Weise steuert, daß die vorgegebene Reihenfolge der Einzelmessungen über die Wiederholungslichtmengenmessungen automatisch eingehalten wird.

Das verwendete Photometer kann eine Rechnereinheit für einen Abgleich aufweisen, welche feststellt, ob der jeweilige aktuelle Wert innerhalb oder außerhalb eines durch gespeicherte Toleranzwerte vorgegebenen Toleranzbereichs um den jeweils gespeicherten Wert liegt, und eine die Lage des aktuellen Wertes in Bezug auf den Toleranzbereich angebende Anzeige besitzen. Eine solchermaßen arbeitende Rechnereinheit bietet sich deshalb an, weil moderne Photometer ohnehin Rechnereinheiten haben. Über die Anzeige erfährt der Benutzer nach Vornahme des Abgleichs, ob er eine Neukalibrierung vornehmen muß, weil der aktuelle Wert außerhalb des Toleranzbereiches liegt oder nicht. Diese Anzeige kann vielgestaltig ausgebildet sein, sei es nur durch Aufleuchten oder sei es durch Angabe des aktuellen Wertes oder der Differenz.

Ferner ist es möglich, daß die Steuereinrichtung die Speichersteuerung zum Überschreiben des gespeicherten Wertes mit dem jeweils zugehörigen aktuellen Wert ansteuert, wenn der aktuelle Wert innerhalb des Toleranzbereiches liegt. Bei dieser Ausführung geschieht das Überschreiben von innerhalb des Toleranzbereiches liegenden aktuellen Werten automatisch durch Ansteuerung der Speichersteuerung. Eine manuelle Überschreibung z.B. durch Tasteneingabe ist dann nicht erforderlich.

Überdies wird vorgeschlagen, daß die Rechnereinheit mit einer Sperreinrichtung zur Sperrung des Photometers für weitere Messungen gekoppelt ist, wobei die Rechnereinheit die Sperreinrichtung ansteuert, wenn ein außerhalb des Toleranzbereichs liegender aktueller Wert ermittelt ist. Hierdurch ist gesichert, daß dann, wenn ein außerhalb des Toleranzbereichs liegender Wert angezeigt wird, dies nicht ignoriert wird und Analysenmeßfolgen erst dann durchgeführt werden können, wenn zuvor eine Neukalibrierung vorgenommen worden ist. Eine weitere Automatisierung läßt sich dadurch erzielen, daß die Küvettenaufnahme einen Sensor zur Erfassung einer Küvette aufweist, der mit der Sperreinrichtung in der Weise gekoppelt ist, daß bei Erfassen einer Küvette in der Küvettenaufnahme die Sperrung aufgehoben wird, um eine Neukalibrierung zu ermöglichen. Dabei kann der Sensor mit einer automatischen Eigencheckeinrichtung zur automatischen Neukalibrierung des Photometers derart gekoppelt sein, daß die Neukalibrierung nur bei Erfassung einer Küvette in der Küvettenaufnahme durchgeführt wird. Statt einer Küvette kann in die Küvettenaufnahme selbstverständlich auch ein Äquivalent gleicher Extinktion eingesetzt werden, beispielsweise in Form eines entsprechend ausgebildeten Glaskörpers oder einer Glasscheibe.

In einer weiteren Ausgestaltung ist vorgesehen, daß die Einzelmeßsteuerung derart mit der Einschalteinrichtung des Photometers gekoppelt ist, daß die Einzelmeßsteuerung durch einen Einschaltvorgang automatisch aktiviert wird. Da bei Photometern der hier in Rede stehenden Art in der Startphase ohnehin eine Reihe von Eigenüberprüfungen vorgenommen werden, entsteht durch die Vornahme einer Einzelmessung oder weniger Einzelmessungen in der Startphase praktisch kein Zeitverlust. Zudem ist gesichert, daß bei normalem Gebrauch Einzelmessungen in kurzen Abständen und damit eine Selbstkorrektur aller gespeicherten Werte in so kurzer Zeit erfolgt, daß normalerweise, solange kein Lampen- oder Filteraustausch stattfinden oder keine außergewöhnliche Beanspruchung auftritt, alle Werte innerhalb des Toleranzbereichs liegen.

Schließlich ist es möglich, daß der Speicher einen Korrekturwertspeicher für die Ablage eines der Extinktion einer Küvette - gegebenenfalls mit Kalibrierlösung - entsprechenden Korrekturwertes aufweist, wobei eine Rechnereinheit zur Umrechnung des jeweils gemessenen Wertes in einen aktuellen Wert aufweist, und die Rechnereinheit mit der Speichersteuerung gekoppelt ist. Dies ermöglicht es, die Wiederholungslichtmengenmessungen ohne eingestellte Küvette durchzuführen.

**Patentansprüche**

1. Verfahren zur photometrischen Bestimmung des pH-Wertes von wäßrigen Flüssigkeiten in Gegenwart eines pH-Indikatores,
dadurch gekennzeichnet, daß als pH-Indikator ein Gemisch aus mehreren Indikatoren verwendet wird und mit Hilfe eines Photometers die Extinktion E bei zwei unterschiedlichen Wellenlängen, nämlich M1 und M2, gemessen wird, die pH-abhängig sind, der Quotient QpH aus den gemessenen Extinktionswerten $E_{M1}$ und $E_{M2}$ gebildet wird, und aus dem Quotienten QpH unter Berücksichtigung des verwendeten pH-Indikators der pH-Wert der untersuchten Flüssigkeit unter Verwendung von Eichkurven ermittelt wird.

2. Verfahren nach Anspruch 1,
dadurch gekennzeichnet, daß einzelne im Indikatorgemisch enthaltende Indikatoren bei steigendem pH-Wert bei einer Wellenlänge M1 eine abnehmende Extinktion und bei einer Wellenlänge M2 eine zunehmende Extinktion aufweisen.

3. Verfahren nach Anspruch 1 oder 2,
dadurch gekennzeichnet, daß über den pH-Bereich die Extinktion bei der Wellenlänge M1 abnimmt und bei der Wellenlänge M2 zunimmt.

4. Verfahren nach einem der Ansprüche 1 bis 3,
dadurch gekennzeichnet, daß ein Photometer mit integriertem Rechner und Speicher eingesetzt wird.

5. Verfahren nach Anspruch 4,
dadurch gekennzeichnet, daß der im Photometer die Eichkurve pH = f (QpH) für die jeweiligen pH-Indikatoren gespeichert sind, die Extinktionswerte $E_{M1}$ und $E_{M2}$ bei den entsprechenden Wellenlängen M1 und M2 programmgesteuert gemessen werden, der Quotient QpH aus einem internen, programmgesteuerten Vergleich mit der Eichkurve ermittelt wird und der pH-Wert direkt im Display angezeigt wird.

**Europäisches Patentamt**

# EUROPÄISCHER RECHERCHENBERICHT

Nummer der Anmeldung

EP 96 11 0546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | APPLIED SPECTROSCOPY, Bd. 44, Nr. 4, 1.Mai 1990, Seiten 722-727, XP000116794 KING D W ET AL: "SPECTRAL MODELING OF SULFONEPHTHALEIN INDICATORS: APPLICATION TO PH MEASUREMENTS USING MULTIPLE INDICATORS" * Seite 722, rechte Spalte, Absatz 1 * * Seite 722, rechte Spalte, Absatz 3 - Seite 723, rechte Spalte, Absatz 1 * | 1 | G01N21/80 |
| Y | | 4,5 | |
| P,Y | DE-A-195 14 845 (MACHEREY NAGEL & CO CHEM) 2.November 1995 * Ansprüche * | 4,5 | |
| P,A | | 1 | |
| A | EP-A-0 189 599 (SUMITOMO ELECTRIC INDUSTRIES) 6.August 1986 * Seite 3, Zeile 18 - Seite 4, Zeile 8 * * Seite 6, Zeile 3 - Zeile 7 * * Seite 11, Zeile 18 - Seite 12, Zeile 3 * * Abbildungen 8,9 * | 1,2,4 | |

**RECHERCHIERTE SACHGEBIETE (Int.Cl.6)**

G01N

Der vorliegende Recherchenbericht wurde für alle Patentansprüche erstellt

| Recherchenort | Abschlußdatum der Recherche | Prüfer |
|---|---|---|
| DEN HAAG | 15.November 1996 | Krametz, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument